# EUROPÄISCHE PATENTSCHRIFT

(11) **EP 2 631 698 B1**
(45) Veröffentlichungstag und Bekanntmachung des Hinweises auf die Patenterteilung: **09.08.2017**
(21) Anmeldenummer: 13155735.7
(22) Anmeldetag: 19.02.2013
(51) Int. Cl.: G02B 26/02

(54) **Verfahren zum Herstellen eines Anzeigeelementes für ein Elektrowetting-Display und Anzeigeelement für ein Elektrowetting-Display**
Method for producing a display element for an electrowetting display and display element for an electrowetting display
Procédé de fabrication d'un élément d'affichage pour un écran à électromouillage et élément d'affichage pour écran à électromouillage

(30) Priorität: 27.02.2012 DE 102012101542
(43) Veröffentlichungstag der Anmeldung: 28.08.2013
(73) Patentinhaber: advanced display technology AG, 9050 Appenzell (CH)
(72) Erfinder: Bitman, Andriy, 44309 Dortmund (DE); Rawert, Markus, 48653 Coesfeld (DE); Müller-Marc, Oliver, 9050 Appenzell (CH); Jerosch, Dieter, 65812 Bad Soden (DE)
(74) Vertreter: Angerhausen, Christoph

(56) Entgegenhaltungen:
- WO-A2-2007/146025
- US-A1- 2007 040 982

## Beschreibung

Die Erfindung betrifft ein Verfahren zum Herstellen eines Anzeigeelementes für ein Elektrowetting-Display.

Dreidimensionale Aufbauten eines Anzeigeelementes für ein Elektrowetting-Display sind beispielsweise aus der WO 2010/136013 A1 bekannt. Das Anzeigeelement, auch Bildpunkt oder Pixel genannt, besteht dabei aus zwei übereinander liegenden Volumina, die durch eine im Regelfall intransparente Zwischenschicht voneinander abgetrennt sind, wobei diese einen fluidischen Übergang für das erste Fluid in Form einer Durchtrittsöffnung aufweist, durch die beim Anlegen eines elektrischen Feldes das Fluid aus einem Volumen in das andere übertreten kann. Die beiden Volumina sind somit als Anzeigekammer bzw. als Reservoirkammer ausgestaltet, wobei nur die Anzeigekammer einsehbar ist und die Reservoirkammer, die in Betrachtungsrichtung hinter der Anzeigekammer liegt, dem Betrachter verborgen bleibt.

Ein weiteres Anzeigeelement ist aus der US 2007/0040982 A1 bekannt.

Bei derartigen dreidimensionalen Aufbauten für Anzeigeelemente ergeben sich Schwierigkeiten bei der Befüllung. Das genau zu dosierende Fluid muss in die Reservoirkammer so eingefüllt werden, dass eine kleinere Menge aus dieser durch die Durchtrittsöffnung hinausragt und Kontakt zu der dort vorhandenen Steuerelektrode hat. Eine reversierte Situation liegt vor, wenn der stabil in der Anzeigekammer gehaltene Flüssigkeitstropfen wieder zurück in die Reservoirkammer transportiert werden soll.

Die durch die Durchtrittsöffnung ragende Fluidmenge bedeutet einen gewissen Grad an Instabilität des Tropfens während der weiteren Montageschritte bei Assemblieren des Elektrowetting-Displays. Manchmal genügen nur kleinere Erschütterungen, um den Tropfen aus der Reservoirkammer unerwünscht auf Flächen der Anzeigekammer gelangen zu lassen. Insbesondere bei höherpixeligen Anzeigen, schon in der Größenordnung von 10 x 14 Anzeigeelementen, wird damit eine fehlerfreie Befüllung schwierig. Reduziert man die-Einfüllmenge an Fluid, ist dessen Lage zwar stabiler, es kann aber passieren, dass der Tropfen anschließend keinen Kontakt zur Elektrode hat und sich ein Pixelfehler einstellt.

Als Zwischenschicht, auch Zwischenelektrode genannt, werden dünne Kunststofffolien verwendet, bevorzugt aus Polyethylenterephthalat. Diese Zwischenschichten sollen auch dazu beitragen, dass die Sicht auf die Reservoirkammer verdeckt bleibt. Üblicherweise wäre eine weiße reflektierende Schicht optimal. Eine weiße Zwischenschicht, die gleichzeitig auch die Anforderungen des Elektrowetting erfüllt, ist nicht einfach bereitzustellen, da die Basismaterialien zumeist transparent sind und eingefärbt werden müssen. Die für die Färbung genutzten Zusätze erhöhen beispielsweise die Rauheitswerte, was das hydrophobe Verhalten der Oberfläche verändert. Die Flexibilität bezüglich einer Modifikation der Reflektivität der Zwischenschicht ist damit sehr eingeschränkt.

Es ist die Aufgabe der Erfindung, ein Verfahren zum Herstellen eines Anzeigeelementes für ein Elektrowetting-Display bereitzustellen bei dem die oben geschilderten Schwierigkeiten und Probleme weitgehend ausgeschaltet sind.

Diese Aufgabe wird durch ein Verfahren nach Anspruch 1 gelöst. Vorteilhafte Ausgestaltungen sind Gegenstand der rückbezogenen Unteransprüche.

Das erfindungsgemäße Verfahren umfasst die folgenden Schritte:
a) Bereitstellen einer Anzeigekammer mit einem ersten Volumen, deren Boden durch eine erste Zwischenfolie gebildet ist, welcher eine erste Durchtrittsöffnung aufweist, wobei die Anzeigekammer durch eine von der ersten Zwischenfolie beabstandete, zumindest teilweise transparente Abdeckung verschlossen ist;
b) Bereitstellen einer Reservoirkammer für Fluid mit einem zweiten Volumen, deren Boden durch ein Substrat gebildet ist, und die beabstandet davon eine zweite Zwischenfolie aufweist, welche die Reservoirkammer verschließt und eine zweite Durchtrittsöffnung aufweist;
c) Bereitstellen einer Menge an Fluid, die größer ist als sowohl das erste Volumen als auch das zweite Volumen, jedoch kleiner als die Summe aus ersten Volumen und zweiten Volumen;
d) Teilen der Fluidmenge in einen ersten Teiltropfen und einen zweiten Teiltropfen;
e) Einbringen des ersten Teiltropfens in die Anzeigekammer;
f) Einbringen des zweiten Teiltropfens in die Reservoirkammer;
g) Zusammenführen der Anzeigekammer und der Reservoirkammer so, dass sich die erste Durchtrittsöffnung und die zweite Durchtrittsöffnung zumindest teilweise überlappen;
h) Anlegen eines elektrischen Feldes an die Anzeigekammer und an die Reservoirkammer, dadurch Verbinden des ersten und des zweiten Teiltropfens.

In der praktischen Ausgestaltung wird man zunächst das benötigte Volumen an Fluid bzw. die Fluidmenge bestimmen, diese dann beispielsweise etwa hälftig teilen und die Teiltropfen in die Reservoirkammer bzw. in die Anzeigekammer einfüllen. Auch muss die Fluidmenge nicht exakt halbiert werden, es sind viele andere Teilungsverhältnisse möglich, was das Befüllverfahren beträchtlich vereinfacht. Dann werden Anzeigekammer und Reservoirkammer zusammengebracht, wobei gegebenenfalls noch eine Funktionsschicht als Zwischenlage eingeführt wird, deren Funktionalität weiter unten noch genauer erläutert wird. Nach dem Anlegen eines elektrischen Feldes an die Anzeigekammer und an die Reservoirkammer verbinden sich der erste und der zweite Teiltropfen. Wenn anschließend eines der Felder abgeschaltet wird, wird das Fluid in die jeweils andere Kammer gefördert. Durch die vorab festgelegte Fluidmenge ist sichergestellt, dass die für das Elektrowetting erforderlichen Anforderungen erfüllt sind und insbesondere immer der Kontakt zur Steuerelektrode gehalten wird. Durch diese Vorgehensweise befindet sich die dosierte Fluidmenge bei Befüllung und Montagehandling immer gesichert in der jeweiligen Kammer.

Üblicherweise wird vor dem Zusammenführen der Kammern ein zweites Fluid, das mit dem ersten Fluid nicht mischbar ist, in die Reservoirkammer eingefüllt. Für das Elektrowetting geeignete Fluide sind beispielsweise Propylencarbonat und Dekan.

Das Anzeigeelement, das mit dem erfindungsgemäßen Verfahren hergestellt werden kann, zeichnet sich somit dadurch aus, dass die Zwischenschicht aus mindestens zwei Zwischenfolien aufgebaut ist, wobei eine erste Zwischenfolie der Anzeigekammer zugeordnet ist und eine zweite Zwischenfolie der Reservoirkammer zugeordnet ist. Die jeweilige Zwischenfolie hat nun auf der von dem Volumen wegweisenden Oberfläche keine für das Elektrowetting unabdingbare Funktion. Damit steht diese Oberfläche für erweiterte Funktionalität zur Verfugung. Beispielsweise können eine oder können beide Oberflächen mit Farbschichten, mit reflektierenden oder fluoreszierenden Schichten überzogen sein. So stellt es kein Problem mehr dar, eine weiße Reflektorschicht für Anzeigeelemente zu gestalten. Es kann auch daran gedacht werden, andere Farben zu verwenden, beispielsweise kann eine grüne Farbschicht in Verbindung mit einem roten Fluid einen Rot/Grün-Umschlag realisieren. In besonderen Fällen ist aber auch ein Farbverlauf denkbar. Auch andere reflektierende Materialien, beispielsweise Metalle, können eingesetzt werden, ebenso wie fluoreszierende Materialien. Die Oberflächen können weiterhin für die Zufuhr von elektrischen Kontakten zum Display verwendet werden, oder lokale oder flächig leuchtende Materialien, wie beispielsweise OLEDs, tragen. Auch können Zufuhr- bzw. Abführkanäle für Fluide vorgesehen sein, was besonders vorteilhaft ist, wenn beispielsweise das farbige Fluid ausgetauscht werden muss. Diese Funktionalität kann auch in einer separaten Funktionsschicht vorgesehen sein, die als Zwischenlage zwischen die beiden Zwischenschichten gebracht wird. Eine derartige Zwischenlage müsste dann natürlich entsprechend den Durchtrittsöffnungen und Rückführöffnungen angebrachte Öffnungen aufweisen, damit die fluidische Verbindung von Anzeigekammer und Reservoirkammer wie üblich aufrecht erhalten bleibt.

Im Folgenden soll die Erfindung anhand der beigefügten Zeichnung näher erläutert werden. Es zeigt:
- Figur 1: eine Seitenansicht einer Anzeigekammer und einer Reservoirkammer mit jeweils bereits eingefüllten Teiltropfen;
- Figur 2: eine Ansicht ähnlich der Figur 1, wobei jedoch zwischen Anzeigekammer und Reservoirkammer eine Funktionsschicht gelegt ist;
- Figur 3: die Anzeigekammer und die Reservoirkammer aus Figur 1, die zu einem Anzeigeelement zusammengefügt sind;
- Figur 4: eine Seitenansicht des zusammengesetzten Anzeigeelementes, nachdem Teiltropfen vereinigt und das elektrische Feld der Anzeigekammer abgeschaltet ist; und
- Figur 5: eine Draufsicht auf ein Anzeigeelement, hergestellt durch das Verfahren der vorliegenden Erfindung.

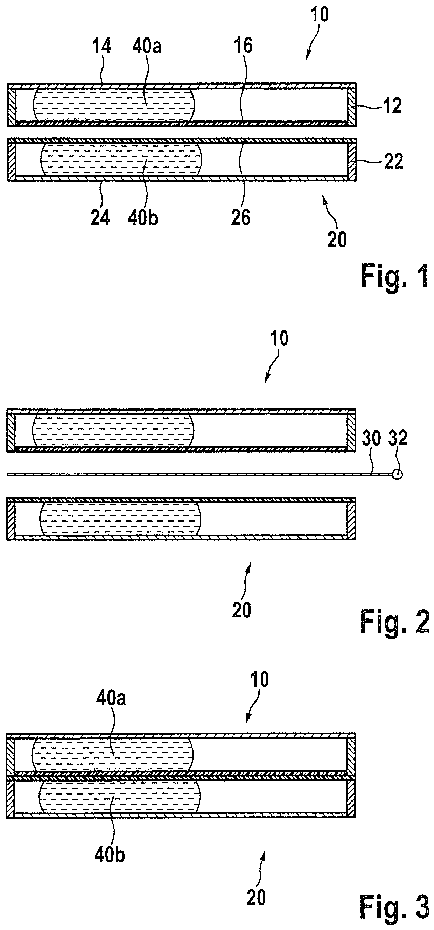

Figur 1 zeigt eine Anzeigekammer 10 und eine Reservoirkammer 20, die jeweils symmetrisch aufgebaut sind und gleiche Volumina umschließen. Die Anzeigekammer 10 umfasst eine umlaufende Seitenwand 12 und ist mit einer Abdeckung 14 verschlossen.

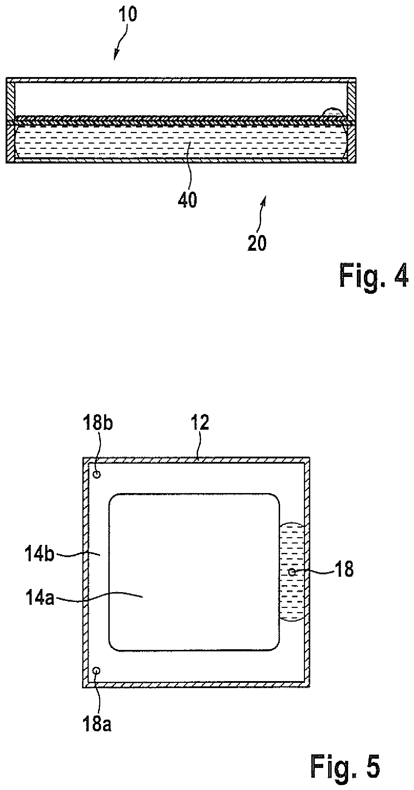

Die Abdeckung 14 ist besser in der Figur 5 veranschaulicht. Dort ist ein Anzeigeelement, wie es mit einem Verfahren der vorliegenden Erfindung hergestellt werden kann, in Draufsicht gezeigt. Die Abdeckung 14 ist in oder an der Seitenwand 12 verklebt und weist einen transparenten Sichtteil 14a sowie einen umlaufenden Rahmen 14b auf. Der Rahmen 14b ist vorliegend nicht transparent ausgeführt, kann jedoch auch transparent ausgeführt sein, und verdeckt insbesondere eine Durchtrittsöffnung 18, die, falls das gefärbte Fluid, wie hier gezeigt, im Wesentlichen vollständig in der Reservoirkammer 20 gehalten ist, ansonsten einen Farbeindruck vermitteln würde. Ebenfalls verdeckt sind Rückführöffnungen 18a, 18b.

Zurück zur Figur 1 weist die Anzeigekammer 10 als Boden eine erste Zwischenfolie 16 auf. Diese Zwischenfolie 16 kann eine Kunststofffolie sein, bevorzugt aus Polyethylenterephthalat, kann aber auch aus Metall oder sehr dünnem Glas bestehen. Die Zwischenfolie 16 enthält die im Zusammenhang mit Figur 5 schon angesprochene Durchtrittsöffnung sowie Öffnungen, die Rückführkanäle bilden.

In einem symmetrischen Aufbau weist die Reservoirkammer 20 eine umlaufende Seitenwand 22 auf, die an oder auf ein Substrat 24 gestellt ist. Die Reservoirkammer 20 ist von einer zweiten Zwischenfolie 26 verschlossen, die, ebenso wie die erste Zwischenfolie 16, aus Kunststoff oder Glas bestehen kann. Die Zwischenfolie 26 weist ebenfalls eine Durchtrittsöffnung sowie Rückführöffnungen auf, die später beim Zusammenbau mit den entsprechenden Öffnungen der Anzeigekammer 10 in Deckung gebracht werden.

Es wird eine Fluidmenge bestimmt, die so bemessen ist, dass sie bei zusammengebautem Anzeigeelement entweder die Anzeigekammer 10 oder die Reservoirkammer 20 vollständig ausfüllt und auch die für den Elektrowetting-Prozess notwendigen Steuerelektroden berührt. Diese ermittelte Fluidmenge wird nun geteilt, im dargestellten Beispiel der Figur 1 etwa hälftig, wobei dann ein ersten Teiltropfen 40a in die Anzeigekammer 10 und ein zweiter Teiltropfen 40b in die Reservoirkammer 20 gefüllt wird. Anschließend wird in einem Tauchbad ein zweites Fluid, zum Beispiel Dekan, eingefüllt, das mit dem ersten Fluid, zum Beispiel Propylencarbonat, nicht mischbar ist. Die Anzeigekammer 10 und die Reservoirkammer 20 sind nun grundsätzlich zur Montage vorbereitet, die ebenfalls im Tauchbad des zweiten Fluides vorgenommen wird.

Die frei liegenden Oberflächen der Zwischenfolien 16, 26 können mit einer Farbschicht, einer reflektierenden Schicht oder einer fluoreszierenden Schicht versehen sein oder sie können als Alternative oder zusätzlich mit gedruckter Elektronik versehen sein. Diese Funktionalität kann den Zwischenfolien 16, 26 vorab verliehen werden, was fertigungstechnische Vorteile hat. Die Zwischenfolien 16, 26 definieren außerdem einen multifunktionalen Zugang, so dass vor dem Zusammenbau beispielsweise elektrische Kontakte für das Display zwischen den Zwischenschichten 16, 26 angeordnet werden können. Es ist denkbar, dort lokal oder flächig leuchtende Elemente, wie OLEDs, vorzusehen. All diese Funktionalität kann auch in einer Funktionsschicht 30 als Zwischenlage untergebracht sein, wie es stark vereinfacht und sehr schematisch in der Figur 2 dargestellt ist.

In Figur 2 sind die befüllte Anzeigekammer 10 und die befüllte Reservoirkammer 20 einander gegenübergestellt, wobei zwischen ihnen eine Funktionsschicht 30 angeordnet ist, die die oben angesprochenen Funktionalitäten, wie Beschichtungen oder Bedruckungen, trägt, wobei bei 32 die Möglichkeit eines elektrischen Anschlusses vorgesehen sein kann. Die Funktionsschicht 30 weist entsprechende Durchtrittsöffnungen und Rückführöffnungen auf, so dass die fluidische Verbindung zwischen Anzeigekammer 10 und Reservoirkammer 20 auch bei Verwendung der Funktionsschicht 30 erhalten bleibt. Die Funktionsschicht 30 kann vor dem Befüllen der Anzeigekammer 10 bzw. der Reservoirkammer 20 an einer von ihnen befestigt werden.

Figur 3 zeigt die zu einem Anzeigeelement kombinierte Anzeigekammer 10 mit daran mittels üblicher Laminattechniken angebundener Reservoirkammer 20. Es wird nun an beide Kammern 10, 20 ein elektrisches Feld angelegt, so dass sich die Teiltropfen 40a, 40b in eine Richtung auf die Durchtrittsöffnung 18 (Figur 5) zu bewegen und sich dort vereinigen. Anschließend wird eines der elektrischen Felder abgeschaltet, so dass sich der Tropfen aus der entsprechenden Kammer zurückzieht.

Bei der in der Figur 4 veranschaulichten Situation ist das elektrische Feld der Anzeigekammer 10 abgeschaltet, so dass sich das Fluid in die Reservoirkammer 20 zurückzieht, dabei aber etwas durch die Durchtrittsöffnung 18 (Figur 5) ragt und die dort vorhandene Elektrode berührt.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zum Herstellen eines Anzeigeelementes für ein Elektrowetting-Display, mit den Schritten:
a) Bereitstellen einer Anzeigekammer (10) mit einem ersten Volumen, deren Boden durch eine erste Zwischenfolie (16) gebildet ist, welche eine erste Durchtrittsöffnung aufweist, wobei die Anzeigekammer (10) durch eine von der ersten Zwischenfolie (16) beabstandete, zumindest teilweise transparente. Abdeckung (14; 14a, 14b) verschlossen ist;
b) Bereitstellen einer Reservoirkammer (20) für Fluid mit einem zweiten Volumen, deren Boden durch ein Substrat gebildet ist und die beabstandet davon eine zweite Zwischenfolie (26) aufweist, welche die Reservoirkammer (20) verschließt und eine zweite Durchtrittsöffnung aufweist;
c) Bereitstellen einer Menge an einem ersten Fluide, die größer ist als sowohl das erste Volumen als auch das zweite Volumen, jedoch kleiner als die Summe aus erstem Volumen und zweitem Volumen;
d) Teilen der Fluidmenge in einen ersten Teiltropfen (40a) und einen zweiten Teiltropfen (40b);
e) Einbringen des ersten Teiltropfens (40a) in die Anzeigekammer (10);
f) Einbringen des zweiten Teiltropfens (40b) in die Reservoirkammer (20);
g) Zusammenführen der Anzeigekammer (10) und der Reservoirkammer (20) so, dass sich die erste Durchtrittsöffnung und die zweite Durchtrittsöffnung ' zumindest teilweise überlappen; und
h) Anlegen eines elektrischen Feldes an die Anzeigekammer (10) und an-die Reservoirkammer (20), dadurch Vereinigen des ersten und des zweiten Teiltropfens (40a, 40b).

2. Verfahren nach Anspruch 1, **dadurch gekennzeichnet, dass** die Schritte e) und f) in einem Vakuumprozess durchgeführt werden.

3. Verfahren nach Anspruch 1, **dadurch gekennzeichnet, dass** vor dem Schritt g) ein zweites Fluid, das mit dem ersten Fluid nicht mischbar ist, in die Reservoirkammer (20) und in die Anzeigekammer (10) eingefüllt wird.

4. Verfahren nach Anspruch 3, **dadurch gekennzeichnet, dass** das Einfüllen des zweiten Fluids und das Zusammenführen der Reservoirkammer (20) und der Anzeigekammer (10) in einem Tauchbad des zweiten Fluides durchgeführt werden.

5. Verfahren nach Anspruch 1, **dadurch gekennzeichnet, dass** vor dem Schritt g) eine Funktionsschicht (30) entweder an der ersten Zwischenfolien (16) auf ihrer Seite, die von der Anzeigekammer (10) abgewandt ist, oder an der zweiten Zwischenfolie (26) auf ihrer Seite, die von der Reservoirkammer, (20) abgewandt ist, angebracht ist, oder als separate Funktionsschicht (30) zwischen der ersten und der zweiten Zwischenfolie (16, 26) angeordnet wird.

## Claims

1. Method for producing a display element for an electrowetting display with the steps:
a) Provision of a display chamber (10) with a first volume, the bottom of which is formed by a first intermediate film (60) which has a first opening, whereby the display chamber (10) is closed by an at least partly transparent cover (14; 14a, 14b) which is at some distance from the first intermediate film (16);
b) Provision of a reservoir chamber (20) for fluid with a second volume, the bottom of which is formed by a substrate and which has a second intermediate film (26) at some distance from it which closes the reservoir chamber (20) and has a second opening;
c) Provision of a quantity of a first fluid which is greater than both the first volume as well as the second volume but is less than the sum of the first volume and second volume;
d) Division of the quantity of fluid into a first partial drop (40a) and a second partial drop (40b);
e) Introduction of the first partial drop (40a) into the display chamber (10);
f) Introduction of the second partial drop (40b) into the reservoir chamber (20);
g) Bringing together of the display chamber (10) and the reservoir chamber (20) so that the first opening and the second opening at least partly overlap;
h) Application of an electrical field to the display chamber (10) and to the reservoir chamber (20), thereby uniting the first partial drop and the second partial drop (40a, 40b).

2. Method as recited in claim 1, **characterized in that** the steps e) and f) are carried out in a vacuum process.

3. Method as recited in claim 1, **characterized in that** before step g), a second fluid which is not miscible with the first fluid is filled into the reservoir chamber (20) and into the display chamber (10).

4. Method as recited in claim 3, **characterized in that** the filling of the second fluid and the bringing together of the reservoir chamber (20) and the display chamber (10) are carried out in an immersion bath of the second fluid.

5. Method as recited in claim 1, **characterized in that** before step g), a function layer (30) is applied either to the first intermediate film (16) on its side that faces away from the display chamber (10) or to the second intermediate film (26) on its side that faces away from the reservoir chamber (20), or is located in the form of a separate function layer (30) between the first and the second intermediate films (16, 26).

## Revendications

1. Procédé de fabrication d'un élément d'affichage pour un affichage électromouillage, avec les étapes suivantes :
a) mise à disposition d'une chambre d'affichage (10) avec un premier volume, dont le fond est constitué d'un premier film intermédiaire (16), qui comprend une première ouverture de passage, la chambre d'affichage (10) étant fermée par un couvercle (14 ; 14a, 14b) au moins partiellement transparent éloigné du premier film intermédiaire (16) ;
b) mise à disposition d'une chambre de réservoir (20) pour un fluide avec un deuxième volume dont le fond est constitué d'un substrat et qui comprend un deuxième film intermédiaire (26) éloigné de celui-ci, qui ferme la chambre de réservoir (20) et qui comprend une deuxième ouverture de passage ;
c) mise à disposition d'une quantité d'un premier fluide, qui est supérieure aussi bien au premier volume qu'au deuxième volume, mais inférieure à la somme du premier et du deuxième volume ;
d) division de la quantité de fluide en une première goutte partielle (40a) et une deuxième goutte partielle (40b) ;
e) introduction de la première goutte partielle (40a) dans la chambre d'affichage (10) ;
f) introduction de la deuxième goutte partielle (40b) dans la chambre de réservoir (20) ;
g) regroupement de la chambre d'affichage (10) et de la chambre de réservoir (20) de façon à ce que la première ouverture de passage et la deuxième ouverture de passage se recouvrent au moins partiellement ; et
h) application d'un champ électrique sur la chambre d'affichage (10) et à la chambre de réservoir (20), afin d'unifier la première et la deuxième goutte partielle (40a, 40b).

2. Procédé selon la revendication 1, **caractérisé en ce que** les étapes e) et f) sont exécutées dans un processus à vide.

3. Procédé selon la revendication 1, **caractérisé en ce que**, avant l'étape g), un deuxième fluide, qui n'est pas miscible avec le premier fluide, est introduit dans la chambre de réservoir (20) et dans la chambre d'affichage (10).

4. Procédé selon la revendication 3, **caractérisé en ce que** l'introduction du deuxième fluide et le regroupement de la chambre de réservoir (20) et de la chambre d'affichage (10) sont exécutés dans un bain d'immersion du deuxième fluide.

5. Procédé selon la revendication 1, **caractérisé en ce que**, avant l'étape g), une couche fonctionnelle (30) est appliquée soit sur le premier film intermédiaire (16) sur son côté opposé à la chambre d'affichage (10), soit sur le deuxième film intermédiaire (26) sur son côté opposé à la chambre de réservoir (20), ou est disposée en tant que couche fonctionnelle (30) entre le premier et le deuxième film intermédiaire (16, 26).
